# EUROPÄISCHE PATENTSCHRIFT

(11) **EP 1 304 245 B1**
(45) Veröffentlichungstag und Bekanntmachung des Hinweises auf die Patenterteilung: **14.03.2007**
(21) Anmeldenummer: 02021954.9
(22) Anmeldetag: 30.09.2002
(51) Int. Cl.: B60J 1/17, B60J 5/04, B62D 25/24

(54) **Coupé oder Cabriolet mit einem versenkbaren Seitenfenster**
Coupé or cabriolet with retractable side window
Coupé ou cabriolet avec une fenêtre latérale rétractable

(30) Priorität: 18.10.2001 DE 10151466
(43) Veröffentlichungstag der Anmeldung: 23.04.2003
(73) Patentinhaber: Bayerische Motoren Werke Aktiengesellschaft, 80809 München (DE)
(72) Erfinder: Becker, Jürgen, 85521 Ottobrunn (DE); Zeller, Roland, 94431 Pilsting (DE); Loichinger, Johann, 94339 Leiblfing (DE)

(56) Entgegenhaltungen:
- EP-A- 0 209 423
- DE-A- 2 206 998
- DE-U- 7 039 799
- US-A- 2 668 735
- US-A- 5 417 465

## Beschreibung

Die Erfindung betrifft ein Coupé oder Cabriolet mit einem zwischen einer inneren und äußeren Seitenwand versenkbaren Seitenfenster, das durch einen Fensterheber betätigt wird.

Viele marktübliche Coupés und Cabriolets haben hinter einer Seitentür ein Seitenfenster, das in die Seitenwand, die im wesentlichen von einer inneren und einer äußeren Seitenwand in Schalenbauweise gebildet ist, absenkbar ist. Das abgesenkte Seitenfenster kommt dabei im Hohlraum zwischen innerer und äußerer Seitenwand zum Liegen. Damit in diesen Hohlraum möglichst kein Wasser eindringen kann, ist oben an der inneren und äußeren Seitenwand eine Dichtung zum Seitenfenster hin angebracht. Dennoch kann nicht vollständig verhindert werden, dass, insbesondere beim Absenken eines nassen Seitenfensters oder in einer Autowaschstraße, etwas Wasser in den Hohlraum gelangen kann. Deshalb ist dieser Hohlraum aus Korrosionsschutzgründen üblicherweise mit Heißwachs versiegelt. Im Laufe der Jahre wird das Heißwachs allerdings mehr und mehr ausgespült, sodass Korrosionsgefahr besteht. Wenn die innere und äußere Seitenwand aus Stahlblech bestehen, können diese nicht mit Schutzgasschweißnähten miteinander verbunden werden, da diese Schweißnähte sehr korrosionsanfällig sind. Die Schweißverbin-dung erfolgt daher durch Punktverschweißungen. Das erfordert eine dafür geeignete Gestaltung der inneren und äußeren Seitenwand. In der Praxis sind dafür meist zusätzliche Blecheinzelteile erforderlich.

Darüber hinaus ist aus der DE 199 11 596 A1 eine Kassette bekannt, die eine versenkbare hintere Seitenscheibe eines Fahrzeugs sowie die zur Verstellung der Seitenscheibe erforderlichen Elemente aufnimmt und als allseitig geschlossenes System mit einer abdichtenden Durchtrittsöffnung für die Seitenscheibe ausgebildet ist. Durch die geschlossene Ausführung der Kassette sind ein die Kassette umgebendes Innen- und Außenblech der Fahrzeugkarosserie besonders korrosionsgeschützt, da entlang der Seitenscheibe in die Kassette eindringendes Wasser nicht an das Innen- oder Außenblech gelangen kann.

Der Erfindung liegt die Aufgabe zugrunde, ein Coupé oder Cabriolet mit einem zwischen einer inneren und äußeren Seitenwand versenkbaren Seitenfenster zu schaffen, bei dem Schutzgasverschweißungen ohne große, zwischen innerer und äußerer Seitenwand eingesetzte Kassette verwendet werden können.

Diese Aufgabe wird durch die Merkmale des Patentanspruchs 1 gelöst.

Ein Coupé oder Cabriolet weist ein zwischen einer inneren und äußeren Seitenwand versenkbares Seitenfenster auf, das durch einen Fensterheber betätigt wird. Kerngedanke der Erfindung ist es, dass unter dem Fensterheber im Bereich zwischen der inneren und äußeren Seitenwand ein wannenförmiger wasserundurchlässiger Behälter karosseriefest angebracht ist. Dadurch wird entlang des Seitenfensters in den Hohlraum zwischen der äußeren und inneren Seitenwand eindringendes Wasser von dem Behälter aufgefangen. Das Wasser kann nicht an korrosionsanfällige Stellen insbesondere im unteren Bereich entlang der Verbindung von innerer und äußerer Seitenwand im Hohlraum gelangen. Es gibt eine klare Trennung zwischen dem Nassbereich des Hohlraums oberhalb des Behälters und einem Trockenbereich unterhalb des Behälters. Da das Wasser nun nicht mehr unten in den Bereich der Verschweißung zwischen äußerer und innerer Seitenwand gelangen kann, sind Schutzgasverschweißungen ohne zusätzliche Blecheinzelteile möglich. Die bisherige Heißwachsversiegelung und / oder Dichtigkeitsfolien im Flansch zwischen innerer und äußerer Seitenwand können entfallen. Die Montage des Behälters kann im Gegensatz zu der bekannten Kassette unabhängig vom Fensterheber erfolgen.

Manchmal wird der Hohlraum zwischen innerer und äußerer Seitenwand seitlich durch ein zusätzliches Schottblech begrenzt. Derartige Schottbleche erhöhen die Steifigkeit der Seitenwandbaugruppe. Sie werden im weiteren nicht explizit erwähnt, da sie für den allgemeinen Erfindungsgedanken nicht wesentlich sind. Bei Ausführungen mit einem solchen Schottblech wird der Hohlraum von der inneren und äußeren Seitenwand und dem Schottblech gebildet. Der erfindungsgemäße Behälter ist dann unter dem Fensterheber im Bereich zwischen der inneren und äußeren Seitenwand und neben dem Schottblech angebracht.

In dem Behälter könnte sich unerwünschterweise im Laufe der Zeit womöglich immer mehr Wasser ansammeln. Um dies zu verhindern, weist der Behälter vorteilhafterweise unten eine Ablauföffnung auf. Um einen gezielten Ablauf des Wassers in einen unkritischen Bereich zu garantieren, wird das Wasser idealerweise von der Ablauföffnung zur Fahrzeugaußenseite kanalisiert. Dies kann beispielsweise durch ein Schlauch- oder Rohrstück erfolgen, das das Wasser von der Ablauföffnung zur Fahrzeugunterseite oder in ein Radhaus leitet. Bei Anordnungen ohne Behälter und ohne Kassette befinden sich am tiefsten Punkt des Hohlraums Wasserablaufbohrungen, die meist im Schwellerbereich optisch wenig ansprechend angebracht sind. Derartige Bohrungen am tiefsten Punkt des Hohlraums können nun entfallen.

Zwischen dem oberen Randbereich des Behälters und der inneren und äußeren Seitenwand und gegebenenfalls dem Schottblech ist in einer vorteilhaften Ausgestaltung eine Dichtung angeordnet. Diese Dichtung stellt sicher, dass auch in diesem Bereich kein Wasser in den Trockenbereich des Hohlraums eindringen kann. Dadurch ist eine hundertprozentige Wasserdichtigkeit des Trockenbereichs gewährleistet. Neben den üblichen Materialen wie EPDM, Moosgummi, etc. ist für die Dichtung vorteilhafterweise auch ein expandierender Schaum geeignet. Dieser expandierende Schaum dehnt sich bei erhöhten Temperaturen, wie sie beispielsweise in einer Lackierstraße herrschen, erheblich aus. Eine derartige Dichtung erleichtert die Montage, da nicht auf einen perfekten Sitz der Dichtung geachtet werden muss. Zur Erleichterung der Montage ist die Dichtung bereits auf dem Behälter montiert, sodass am Fahrzeug nur eine vormontierte Baugruppe eingesetzt werden muss. Außerdem ist sichergestellt, dass die Dichtung später umlaufend perfekt an der inneren und äußeren Seitenwand anliegt, da sie beim Expandieren während der Endlackierung des Fahrzeugs alle Unebenheiten vollständig ausfüllt.

Der Behälter lässt sich besonders einfach und preiswert aus Kunststoff herstellen. Kunststoffe haben den Vorteil, dass sie nicht bei Einwirkung von Wasser korrodieren und ein geringes Eigengewicht mitbringen. Ferner können bei einem Behälter aus Kunststoff günstigerweise Befestigungseinrichtungen, wie Anschraubdome, Bohrungen, oder Befestigungsclipse leicht einteilig zusammen mit dem Behälter hergestellt werden. Damit sind die Toleranzen des Behälters zu den Befestigungsmöglichkeiten werkzeuggebunden und so eng begrenzt. Es sind keine zusätzlichen Bauteile zur Befestigung erforderlich.

Während der kataphoretischen Tauchlackierung der Rohkarosserie des Fahrzeugs muss sichergestellt werden, dass auch der Hohlraum zwischen innerer und äußerer Seitenwand innen vollständig mit Lack in Berührung kommt. Dazu befinden sich seitlich im Hohlraum große Aussparungen, durch die der Lack hinein- und wieder herausströmen kann. Um zu verhindern, dass in den Hohlraum eingedrungenes Wasser durch eine solche Aussparung in angrenzende Hohlräume gelangen kann, weist der Behälter idealerweise zumindest eine seitliche Lasche auf, die zumindest eine solche Aussparung verschließt. Durch die einteilige Ausführung mit dem Behälter ist zum Verschluss einer Aussparung kein separates Bauteil erforderlich.

Weitere vorteilhafte Ausgestaltungen sind Gegenstand von Unteransprüchen.

In der Zeichnung ist ein Ausführungsbeispiel der Erfindung dargestellt, das im folgenden näher beschrieben wird. Die einzelnen Figuren zeigen in schematischer Darstellungsweise:
- **Fig. 1**: einen Querschnitt durch eine Seitenwand eines Cabriolets im Bereich eines hinteren Seitenfensters, das in einen Hohlraum zwischen innerer und äußerer Seitenwand versenkt werden kann und
- **Fig.** 2: eine perspektivische Ansicht eines erfindungsgemäßen Behälters, der in **Fig.** 1 zwischen innerer und äußerer Seitenwand angeordnet ist.

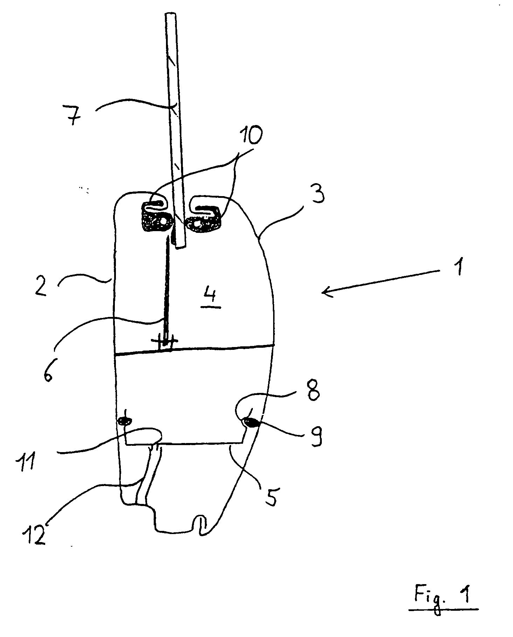

Die in **Fig.** 1 gezeigte Seitenwand 1 eines Cabriolets in Schalenbauweise besteht aus einer inneren Seitenwand 2 und einer äußeren Seitenwand 3 jeweils aus Stahlblech. Zwischen der inneren Seitenwand 2 und der äußeren Seitenwand 3 liegt ein Hohlraum 4. In dem Hohlraum 4 ist ein Fensterheber 6 angebracht. Der Fensterheber 6 kann ein Seitenfenster 7 aus der gezeigten geschlossenen oberen Stellung in eine versenkte untere Stellung verlagern. Am oberen Rand der inneren Seitenwand 2 und der äußeren Seitenwand 3 sind zwei Dichtungen 10 befestigt, die am Seitenfenster 7 herunterlaufendes Wasser und Schmutz abhalten sollen, in den Hohlraum 4 zu gelangen. Unterhalb des Fensterhebers 6 ist in dem Hohlraum 4 ein wannenförmiger Behälter 5 aus Kunststoff karosseriefest mit an den Behälter 5 angespritzten Clipsen angebracht. In eine umlaufende Nut 8 am oberen äußeren Rand des Behälters 5 ist eine Dichtung 9 aus EPDM eingesteckt. Diese Dichtung 9 dichtet den äußeren Rand des Behälters 5 zur inneren Seitenwand 2 und zur äußeren Seitenwand 3 ab. Auf der Unterseite des Behälters 5 befindet sich eine trichterförmige Ablauföffnung 11. Auf die Ablauföffnung 11 ist ein elastischer Kunststoffschlauch 12 aufgesteckt, der von der Ablauföffnung 11 bis zum Radhaus des nicht dargestellten Fahrzeugs verläuft.

Am Seitenfenster 7 herunterlaufendes Wasser wird größtenteils von den beiden Dichtungen 10 vom Hohlraum 4 abgehalten. Das restliche Wasser, das an den Dichtungen 10 vorbei nach unten läuft, wird im Hohlraum 4 durch den Behälter 5 aufgefangen. Durch die Ablauföffnung 11 des Behälters 5 und den elastischen Kunststoffschlauch 12 wird das Wasser umgehend aus dem Behälter 5 zum Radhaus abgeleitet. Das Wasser kann nicht in den Trockenbereich des Hohlraums 4 unterhalb des Behälters 5 gelangen. Dadurch können im Trockenbereich Schutzgasverschweißungen verwendet werden. Beim Stand der Technik konnten nur Punktverschweißungen zum Einsatz kommen, da der ganze Hohlraum 4 mit Wasser in Kontakt kommen konnte. Bei Schutzgasverschweißungen ist eine freiere Gestaltung der inneren Seitenwand 2 und der äußeren Seitenwand 3 möglich. Dadurch kann der Aufbau der Seitenwand 1 vereinfacht werden, insbesondere der Einsatz zusätzlicher Blecheinzelteile kann reduziert werden. Die Gefahr von Korrosion im Hohlraum 4 ist sehr gering, da die gefährdetsten Bereiche im Trockenbereich liegen. Auf eine zusätzliche Versiegelung des Hohlraums 4 mit Heißwachs kann verzichtet werden.

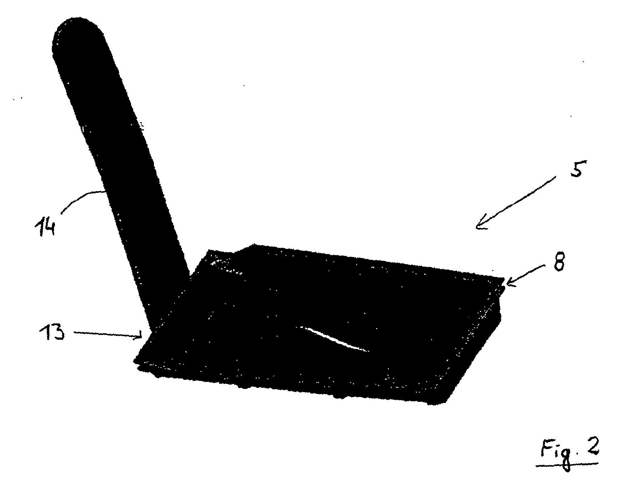

**Fig.** 2 zeigt den wannenförmigen Behälter 5 aus **Fig.** 1 allein in einer perspektivischen Ansicht. An der linken Schmalseite 13 des Behälters 5 ist eine Zunge 14 angespritzt, die sich nach oben erstreckt. Zwischen der inneren Seitenwand 2 und der äußeren Seitenwand 3 ist eine hier nicht dargestellte, versteifende Schottwand angeordnet. Der Behälter 5 liegt mit der linken Schmalseite 13 an dieser Schottwand an. In dieser Schottwand befindet sich eine große Aussparung, damit bei der kataphoretischen Tauchlackierung der Lack gut in den Hohlraum 4 ein- und wieder ausströmen kann. Um zu verhindern, dass durch diese Aussparung Wasser in einen benachbarten Hohlraum eindringen kann, wird die Aussparung mit der Zunge 14 bei der Montage des Behälters 5 automatisch mit verschlossen.

## Patentansprüche

1. Coupé oder Cabriolet mit einem hinter einer Seitentür, zwischen einer inneren und äußeren Seitenwand versenkbaren Seitenfenster, das durch einen Fensterheber betätigt wird, **dadurch gekennzeichnet, dass** unter dem Fensterheber (6) im Bereich zwischen der inneren und äußeren Seitenwand (2 und 3) ein wannenförmiger wasserundurchlässiger Behälter (5) karosseriefest angebracht ist.

2. Coupé oder Cabriolet nach Anspruch 1, **dadurch gekennzeichnet, dass** der Behälter (5) unten eine Ablauföffnung (11) aufweist.

3. Coupé oder Cabriolet nach Anspruch 2, **dadurch gekennzeichnet, dass** Flüssigkeiten aus dem Behälter (5) von der Ablauföffnung (11) zur Fahrzeugaußenseite kanalisiert werden.

4. Coupé oder Cabriolet nach einem der vorhergehenden Ansprüche, **dadurch gekennzeichnet, dass** zwischen dem oberen Randbereich des Behälters (5) und der inneren und äußeren Seitenwand (2 und 3) eine Dichtung (9) angeordnet ist.

5. Coupé oder Cabriolet nach Anspruch 4, **dadurch gekennzeichnet, dass** die Dichtung (9) aus expandierbarem Schaum besteht.

6. Coupé oder Cabriolet nach einem der vorhergehenden Ansprüche, **dadurch gekennzeichnet, dass** der Behälter (5) aus Kunststoff ist.

7. Coupé oder Cabriolet nach Anspruch 6, **dadurch gekennzeichnet, dass** mit dem Behälter (5) Befestigungseinrichtungen einteilig ausgeführt sind.

8. Coupé oder Cabriolet nach einem der vorhergehenden Ansprüche, **dadurch gekennzeichnet, dass** der Behälter (5) zumindest eine seitliche Lasche (14) aufweist, die zumindest eine seitliche Öffnung des von innerer und äußerer Seitenwand (2 und 3) gebildeten Hohlraums verschließt.

## Claims

1. A coupé orconvertible with a side window which can be lowered between an inner and an outer side panel behind a side door and is actuated by a window-opener, **characterised in that** a trough-shaped watertight container (5) is fixed to the body under the window-opener (6) in the region between the inner and the outer side panel (2 and 3).

2. A coupé or convertible according to claim 1, **characterised in that** the container (5) has a drainage opening (11) at the bottom.

3. A coupé or convertible according to claim 2, **characterised in that** liquids are channelled from the container (5) to the outside of the vehicle through the drainage opening (11).

4. A coupé or convertible according to any of the preceding claims, **characterised in that** a seal (9) is disposed between the top edge region of the container (5) and the inner and the outer side panel (2 and 3).

5. A coupé or convertible according to claim 4, **characterised in that** the seal (9) is of expandable foam.

6. A coupé or convertible according to any of the preceding claims, **characterised in that** the container (5) is of plastics material.

7. A coupé or convertible according to claim 6, **characterised in that** fastening devices are made integrally with the container (5).

8. A coupé or convertible according to any of the preceding claims, **characterised in that** the container (5) has at least one side lug (14) which closes at least one side opening in the cavity formed by the inner and the outer side panel (2 and 3).

## Revendications

1. Coupé ou cabriolet avec, derrière une portière latérale, une fenêtre latérale rétractable entre des parois latérales intérieure et extérieure, et actionnée par un lève-vitre,
**caractérisé en ce qu'**
un récipient (5) en forme de cuve étanche à l'eau est monté de manière fixe par rapport à la carrosserie sous le lève-vitre (6), dans la zone entre les parois latérales intérieure et extérieure (2 et 3).

2. Coupé ou cabriolet selon la revendication 1,
**caractérisé en ce que**
le récipient (5) présente une ouverture d'évacuation (11) dans le bas.

3. Coupé ou cabriolet selon la revendication 2,
**caractérisé en ce que**
les liquides sortant du récipient (5) sont canalisés de l'ouverture d'évacuation (11) à l'extérieur du véhicule.

4. Coupé ou cabriolet selon une des revendications précédentes,
**caractérisé en ce qu'**
un joint (9) est disposé entre la zone périphérique supérieure du récipient (5) et les parois latérales intérieure et extérieure (2 et 3).

5. Coupé ou cabriolet selon la revendication 4,
**caractérisé en ce que**
le joint (9) est constitué de mousse expansée.

6. Coupé ou cabriolet selon une des revendications précédentes,
**caractérisé en ce que**
le récipient (5) est en plastique.

7. Coupé ou cabriolet selon la revendication 6,
**caractérisé en ce que**
des dispositifs de fixation sont réalisés d'une seule pièce avec le récipient (5).

8. Coupé ou cabriolet selon une des revendications précédentes,
**caractérisé en ce que**
le récipient (5) présente au moins une patte latérale (14) qui obture au moins une ouverture latérale de l'interstice formé par les parois latérales intérieure et extérieure (2 et 3).
